(19) Europäisches Patentamt

European Patent Office

Office européen des brevets

(11) Veröffentlichungsnummer: **0 212 178**
**A2**

(12) **EUROPÄISCHE PATENTANMELDUNG**

(21) Anmeldenummer: 86109148.6

(51) Int. Cl.⁴: **C02F 1/52**

(22) Anmeldetag: 04.07.86

(30) Priorität: 14.08.85 DE 3529188

(43) Veröffentlichungstag der Anmeldung:
04.03.87 Patentblatt 87/10

(84) Benannte Vertragsstaaten:
AT DE FR

(71) Anmelder: **Gesellschaft zur Beseitigung von Sondermüll In Bayern mbH**
**Herzogstrasse 60**
**D-8000 München 40(DE)**

(72) Erfinder: **Pfeiffer, Ernst**
**Kepserstrasse 36**
**D-8050 Freising(DE)**

(74) Vertreter: **Tetzner, Volkmar, Dr.-Ing. Dr. Jur.**
**Van-Gogh-Strasse 3**
**D-8000 München 71(DE)**

(54) Anlage und Verfahren zur kontinuierlichen Flockung von Abwasser.

(57) Die Erfindung betrifft eine Anlage sowie ein Verfahren zur kontinuierlichen Flockung von Abwasser im Durchlaufbetrieb unter Verwendung einer einzigen, mehrfach U-förmig abgebogenen Reaktionsschlange. Hierdurch ergibt sich ein besonders kostensparender Aufbau sowie eine einfache Betriebsweise.

EP 0 212 178 A2

## Anlage und Verfahren zur kontinuierlichen Flockung von Abwasser

Die Erfindung betrifft eine Anlage - (entsprechend dem Oberbegriff des Anspruches 1) zur kontinuierlichen Flockung von Abwasser im Durchlaufbetrieb, ferner ein Verfahren zum Betrieb einer derartigen Anlage.

Eine bekannte Anlage zur kontinuierlichen Flockung von Abwasser im Durchlaufbetrieb enthält drei mit Mischern ausgerüstete Reaktionsbehälter, die vom Abwasser nacheinander durchsetzt werden. Vor dem ersten Reaktionsbehälter wird ein Mittel zur Emulsionsspaltung (Säure) zugegeben. Zwischen dem ersten und zweiten Reaktionsbehälter erfolgt eine pH-Wert-Messung sowie die Zugabe eines Mittels (meist Natronlauge) zur Neutralisation sowie zur Fällung von Schwermetallen. Zwischen dem zweiten und dritten Reaktionsbehälter wird schließlich ein Mittel (meist ein Polyelektrolyt auf Acrylharzbasis) zur Vergrößerung Stabilisierung der entstandenen Flocken zugesetzt. Außer der genannten pH-Wert-Messung zwischen dem ersten und zweiten Reaktionsbehälter finden sich weitere pH-Wert-Meßstellen im zweiten und dritten Reaktionsbehälter.

Der Raumbedarf und anlagentechnische Aufwand dieser bekannten Ausführung ist beträchtlich. Die Wartung, insbesondere die Reinigung der bekannten Anlage, erfordert einen erheblichen Arbeitsaufwand.

Der Erfindung liegt daher die Aufgabe zugrunde, eine Anlage der im Oberbegriff des Anspruches 1, vorausgesetzten Art so auszubilden, daß der Raumbedarf und anlagentechnische Aufwand wesentlich verringert werden und eine besonders einfache Wartung ermöglicht wird.

Diese Aufgabe wird erfindungsgemäß durch die kennzeichnenden Merkmale des Anspruches 1 gelöst.

Zweckmäßige Ausgestaltungen der Erfindung sind Gegenstand der Unteransprüche.

Wie eingehende Versuche zeigten, ergibt sich durch die mehrfache U-förmige Umlenkung der Reaktionsschlange eine gute Durchmischung des Abwassers mit den Zusatzstoffen, so daß auf gesonderte Reaktionsbehälter mit eingebauten Mischvorrichtungen verzichtet werden kann. Hierdurch ergibt sich eine wesentliche Vereinfachung der Anlage und eine erhebliche Verringerung ihres Raumbedarfes. Die Bedienung der Anlage ist völlig unproblematisch und erfordert einschließlich der turnusmäßigen Reinigungsarbeiten geringsten Zeitaufwand.

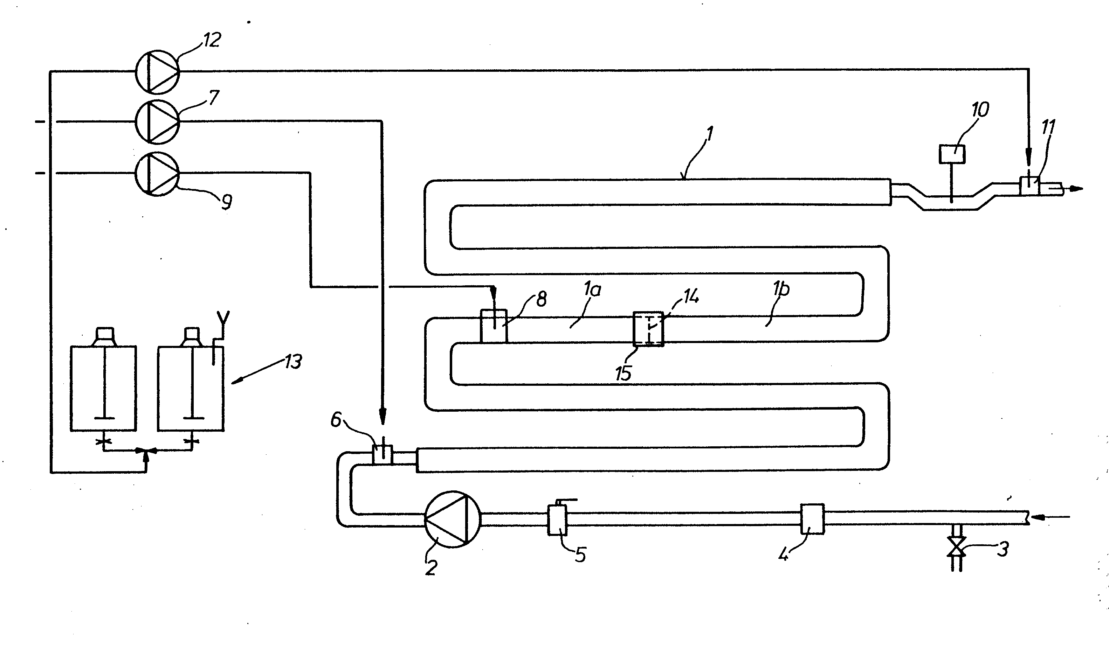

Ein Ausführungsbeispiel der Erfindung ist in der Zeichnung veranschaulicht.

Kernstück der Anlage ist eine mehrfach U-förmig abgebogene Reaktionsschlange 1, die beim dargestellten Ausführungsbeispiel vier U-förmigen Umlenkungen aufweist. Jede U-förmige Umlenkung der Reaktionsschlange 1 wird dabei durch zwei winkelförmige 90°-Krümmer gebildet.

Das Abwasser wird mittels einer Förderpumpe 2 durch die Reaktionsschlange 1 gepumpt und gelangt nach der Reaktionsschlange 1 in einen (nicht dargestellten) Filter.

In Strömungsrichtung vor der Förderpumpe 2 ist ein Ablaufschieber 3, ein induktiver Durchflußmesser 4 sowie ein Absperrschieber 5 angeordnet.

Zwischen der Förderpumpe 2 und dem Anfang der Reaktionsschlange 1 befindet sich eine Dosierstelle 6 zur Zugabe eines Mittels zur Emulsionsspaltung. Als derartiges Mittel zur Emulsionsspaltung kann vorteilhaft Abfallsäure Verwendung finden, vorzugsweise Beizsäure als Abfall von Metallbeizvorgängen. Diese Säure wird über eine Dosierpumpe 7 der Dosierstelle 6 zugeführt.

Etwa im mittleren Bereich der Reaktionsschlange 1 befindet sich eine Dosierstelle 8 zur Zugabe eines Mittels zur Neutralisation sowie zur Fällung von Schwermetallen. Dieses Mittel wird vorzugs weise durch Natronlauge gebildet und über eine Dosierpumpe 9 der Dosierstelle 8 zugeführt. Durch diese Natronlauge wird im Abwasser ein pH-Wert von 8,5 bis 9 eingestellt. In dem genannten pH-Bereich ist die geringste Löslichkeit der Metalle im Ab wasser gegeben, so daß die Metalle als Hydroxidflocken ausfallen.

Im unmittelbaren Anschluß an das Ende der Reaktionsschlange 1 ist eine Einrichtung 10 zur Messung des pH-Wertes vorgesehen. Nach dieser Meßeinrichtung 10 ist eine Dosierstelle 11 angeordnet, der über eine Dosierpumpe 12 ein Mittel zur Vergrößerung und Stabilisierung der bei der Emulsionsspaltung sowie Fällung entstandenen Flocken zugeführt wird. Dieses Mittel ist zweckmäßig ein Polyelektrolyt auf Acrylharzbasis. Seine Mischung erfolgt in einer Dosiereinheit 13.

Die Dosierung der Natronlauge über die Dosierpumpe 9 wird von der pH-Messung der Einrichtung 10 gesteuert.

Die Zugabe des zur Vergrößerung und Stabilisierung der Flocken bestimmten Mittels über die Dosierstelle 11 erfolgt erst hinter der Reaktionsschlange 1, weil durch die Zugabe dieses Mittels die Flocken vergrößert und stabilisiert werden. Die gute Einmischung dieses Mittels wird durch ein im nachgeschalteten (nicht dargestellten) Filtertrog angeordnetes Rührwerk gewährleistet.

Nach den bisherigen Betriebserfahrungen liegt die Fließgeschwindigkeit des Abwassers in der Reaktionsschlange zweckmäßig zwischen 0,1 und 0,6 m/s.

Der lichte Durchmesser der Reaktionsschlange sollte mindestens etwa 150 mm betragen. Die Gesamtlänge der Reaktionsschlange liegt zwischen 3 und 15 m, vorzugsweise zwischen 5 und 10 m. Die in der Zeichnung veranschaulichte, vierfach abgebogene Reaktionsschlange kann beispielsweise eine Breite (Länge zwischen zwei Umlenkungen) von etwa 1,75 m und eine Höhe von etwa 2 m besitzen.

Die Reaktionsschlange weist mindestens zwei, vorzugsweise drei bis fünf U-förmige Umlenkungen auf. Verglichen mit der Verwendung von 180°-U-Bögen hat sich die Benutzung von jeweils zwei winkelförmigen 90°-Krümmern zur Bildung einer U-förmigen Umlenkung als vorteilhaft erwiesen, da hierdurch eine bessere Durchwirbelung des strömenden Flüssigkeitsgemisches erfolgt.

Ein lichter Rohrdurchmesser von mindestens 150 mm ist zweckmäßig, um Anbackungen weitgehend auszuschließen bzw. ihre Auswirkungen zu verringern. Dadurch ergibt sich eine lange Verfügbarkeit der Anlage zwischen zwei Reinigungsvorgängen.

Die Reaktionsschlange wird zweckmäßig aus Kunststoff, vorzugsweise aus PVC, hergestellt.

Um die Reaktionsschlange 1 leicht reinigen zu können, ist sie etwa im mittleren Bereich ihrer Länge durchgeschnitten. Die Schnittstelle 14 ist im Betrieb mittels einer Rohrschelle 15 dicht verschlossen. Nach Zurückschieben der Rohrschelle 15 können die beiden an die Schnittstelle 14 angrenzenden Teile 1a, 1b der Reaktionsschlange 1 so weit voneinander entfernt werden - (beispielsweise etwa 10 cm aufgrund einer geeigneten Aufhängung der oberen Hälfte der Reaktionsschlange), daß ein Schlauch mit Düse für die Reinigung mit Hochdurchwasser in beiden Richtungen in die Reaktionsschlange eingeführt werden kann. Nach Beendigung des Reinigungsvorganges werden die beiden Teile der Reaktionsschlange 1 vollständig zusammengeschoben, und es wird der Spalt an der Schnittstelle 14 wieder durch die Rohrschelle 15 verschlossen.

Die erfindungsgemäße Anlage zeichnet sich damit im Vergleich zu bekannten Ausführungen auch durch eine besonders leichte Reinigungsmöglichkeit aus.

## Ansprüche

1. Anlage zur kontinuierlichen Flockung von Abwasser im Durchlaufbetrieb, enthaltend

a) mehrere vom Abwasser nacheinander durchströmte Reaktionsräume,

b) Einrichtungen zur Zugabe eines Mittels zur Emulsionsspaltung, eines Mittels zur Neutralisation sowie zur Fällung von Schwermetallen sowie eines Mittels zur Vergrößerung und Stabilisierung der bei der Emulsionsspaltung sowie Fällung entstandenen Flocken,

c) wenigstens eine Pumpe zur kontinuierlichen Förderung des Abwassers durch die Reaktionsräume,

gekennzeichnet durch folgende Merkmale:

d) die Reaktionsräume werden durch die einzelnen Teilstrecken einer einzigen, mehrfach U-förmig abgebogenen Reaktionsschlange (1) gebildet;

e) die Einrichtung (6) zur Zugabe des Mittels zur Emulsionsspaltung ist vor der Reaktionsschlange - (1), die Einrichtung (8) zur Zugabe des

Mittels zur Neutralisation und zur Fällung von Schwermetallen ist im Bereich der Reaktionsschlange, vorzugsweise im mittleren Bereich, und die Einrichtung (10) zur Zugabe des Mittels zur Vergrößerung und Stabilisierung der Flocken ist nach der Reaktionsschlange angeordnet.

2. Anlage nach Anspruch 1, dadurch gekennzeichnet, daß eine Einrichtung (10) zur Messung des pH-Wertes am Ende der Reaktionsschlange - (1) vor der Einrichtung (11) zur Zugabe des Mittels zur Vergrößerung und Stabilisierung der Flocken angeordnet ist.

3. Anlage nach Anspruch 1, dadurch gekennzeichnet, daß die Reaktionsschlange (1) einen lichten Rohrdurchmesser von mindestens 150 mm aufweist.

4. Anlage nach Anspruch 1, dadurch gekennzeichnet, daß die Gesamtlänge der Reaktionsschlange (1) zwischen 3 und 15 m, vorzugsweise zwischen 5 und 10 m, liegt.

5. Anlage nach Anspruch 1, dadurch gekennzeichnet, daß die Reaktionsschlange (1) mindestens zwei, vorzugsweise drei bis fünf U-förmige Umlenkungen aufweist.

6. Anlage nach Anspruch 1, dadurch gekennzeichnet, daß jede U-förmige Umlenkung der Reaktionsschlange (1) durch zwei winkelförmige 90°-Krümmer gebildet wird.

7. Anlage nach Anspruch 1, dadurch gekennzeichnet, daß die Reaktionsschlange (1) aus Kunststoff besteht.

8. Verfahren zum Betrieb einer Anlage nach Anspruch 1, dadurch gekennzeichnet, daß als Mittel zur Emulsionsspaltung Abfallsäure, vorzugsweise Beizsäure als Abfall von Metallbeizvorgängen, Verwendung findet.

9. Verfahren zum Betrieb einer Anlage nach Anspruch 1, dadurch gekennzeichnet, daß die Fließgeschwindigkeit in der Reaktionsschlange (1) zwischen 0,1 und 0,6 m/s beträgt.

10. Verfahren zum Betrieb einer Anlage nach den Ansprüchen 1 und 2, dadurch gekennzeichnet, daß der am Ende der Reaktionsschlange (1) gemessene pH-Wert als Steuergröße für die Dosierung des zur Neutralisation sowie zur Fällung von Schwermetallen dienenden Mittels, vorzugsweise Natronlauge, dient.

11. Anlage nach Anspruch 1, gekennzeichnet durch folgende Merkmale:

a) Die Reaktionsschlange (1) ist etwa im mittleren Bereich ihrer Länge durchgeschnitten;

b) die Schnittstelle (14) ist im Betrieb mittels einer Rohrschelle (15) verschlossen;

c) nach Zurückschieben der Rohrschelle - (15) sind die beiden an die Schnittstelle (14) angrenzenden Teile (1a, 1b) der Reaktionsschlange - (1) so weit voneinander entfernbar, daß ein Schlauch mit Düse für die Reinigung mit Hochdruckwasser in beiden Richtungen in die Reaktionsschlange (1) einführbar ist.

0 212 178